# EUROPÄISCHE PATENTSCHRIFT

(11) **EP 1 135 642 B1**
(45) Veröffentlichungstag und Bekanntmachung des Hinweises auf die Patenterteilung: **23.04.2003**
(21) Anmeldenummer: 99959325.4
(22) Anmeldetag: 24.11.1999
(51) Int. Cl.: F16L 23/036, F16L 17/06

(54) **VORRICHTUNG ZUM VERBINDEN VON LEITUNGSABSCHNITTEN**
DEVICE FOR CONNECTING CONDUIT SECTIONS
DISPOSITIF POUR RACCORDER DES TRON ONS DE CONDUITE

(30) Priorität: 09.12.1998 EP 98123061
(43) Veröffentlichungstag der Anmeldung: 26.09.2001
(73) Patentinhaber: SIEMENS AKTIENGESELLSCHAFT, 80333 München (DE)
(72) Erfinder: HAJE, Detlef, D-46236 Bottrop (DE); SCHOLL, Lothar, D-45481 Mülheim a.d. Ruhr (DE)
(86) Internationale Anmeldenummer: EP9909087
(87) Internationale Veröffentlichungsnummer: WO00034707

(56) Entgegenhaltungen:
- DE-A- 2 452 770
- DE-A- 19 711 580
- DE-B- 1 286 356

## Beschreibung

Die Erfindung bezieht sich auf eine Vorrichtung zum Verbinden von Leitungsabschnitten einer von einem Medium durchströmten Rohrleitung, mit einer Anzahl von am Umfang deren Rohrenden verteilt angeordneten Zugelementen. Unter Rohrleitung wird hierbei insbesondere eine von einem heißen und unter hohem Druck stehenden Medium durchströmte, z. B. dampfdurchströmte Rohrleitung verstanden.

Aufgrund der zu erwartenden Dampfparameter zukünftiger Kraftwerke mit einer Dampf- oder Frischdampftemperatur von mehr als 600°C und einem Dampfdruck von mehr als 250bar werden auch an die Rohrleitungen und Leitungsverbindungen entsprechend hohe Anforderungen gestellt. In einer derartigen Dampfzuleitung kann die Verbindungsstelle zwischen Rohrabschnitten der Dampf führenden Rohrleitung geschweißt und somit unlösbar oder nach Art einer Flanschverbindung lösbar ausgeführt sein. Derartige Verbindungen sind auch zwischen der Rohrleitung und einem Dampfeinlaßventil einer Dampfturbine sowie zwischen diesem und dem Turbinengehäuse vorgesehen. Während bekannte lösbare Verbindungen aufgrund der temperaturbedingt geringen verbleibenden Werkstoffkennwerte herkömmlicher Werkstoffe nur begrenzt einsetzbar sind, weisen Schweißverbindungen hinsichtlich der Montierbarkeit und der Demontierbarkeit, insbesondere im Revisionsfall, Nachteile auf.

Der Einsatz herkömmlicher Rohrverbindungen nach Art einer flanschartigen Rohrverschraubung, einer Rohrverschraubung mittels Überwurfmutter oder einer Klammerverbindung ist bei hohen oder höchsten Dampfzuständen aus unterschiedlichen Gründen problematisch. So setzt eine flanschartige Rohrverschraubung die Verfügbarkeit eines Schraubenmaterials ausreichender Festigkeit voraus. Außerdem ist aufgrund des runden Schraubenquerschnittes nur ein begrenzter Anteil der Flanschfläche, d h. des radial um die Rohrleitung herum verfügbaren Platzes, zur Aufbringung von Zugkräften nutzbar. Darüber hinaus erfordert die runde Aufstandsfläche der Schraubenmutter einen Mindestabstand zu benachbarten Konstruktionselementen, so dass sich der minimale Flanschaußendurchmesser durch den Außendurchmesser der Rohrleitung und den Mindestabstand zwischen benachbarten Muttern auf dem Teilkreis sowie durch den Außendurchmesser der Aufstandsfläche ergibt. Der dadurch bedingte Abstand zwischen der Rohraußenwand und der Mitte des Schraubenbolzens bewirkt ein verhältnismäßig hohes Flanschmoment, was insbesondere bei niedrigen verfügbaren Werkstoffkennwerten einen erheblichen Nachteil darstellt.

Bei einer Rohrverbindung mittels Überwurfmutter stellt sich insbesondere am Übergang vom zylindrischen Bereich auf den axialen Anlagebereich eine Spannungskonzentration ein. Bei temperaturbedingt niedrigen Werkstoffkennwerten ist bezüglich der Auslegung der Überwurfmutter eine Begrenzung der Kriechverformungen in diesem Bereich zu berücksichtigen, was bei hohen Dampfzuständen zu verhältnismäßig großen und somit nur schwierig handhabbaren Bauteilen führt. Da ein Flansch nach dem Einlegen der Überwurfmutter an z.B. das zu verbindende Ventil angeschweißt werden muß, wird sowohl die Herstellung beim Schweißen entsprechend großer Wandstärken als auch die Baulänge der Verbindung negativ beeinflusst. Darüber hinaus ergibt sich bei hohen Temperaturen ein relativ großer, radialer und axialer Platzbedarf.

Die verhältnismäßig großen radialen Ausdehnungen ergeben sich auch bei einer z. B. aus der DE 197 11 580 A1 oder auch aus der DE 24 52 770 A1 bekannten Klammerverbindung, bei der eine Anzahl von Verbindungselementen in Form von klauen- oder klammerartigen Ringsegmenten am Umfang der flanschartigen Verbindung angeordnet sind. Bei einer Flanschverbindung mit derartigen Verbindungselementen besteht zudem der Nachteil deren zur Aufnahme der Zugkräfte nicht ausreichenden Festigkeit, zumal die Verbindungselemente infolge des radialen Umgriffs um die Flanschaußenseiten zusätzlich zu einer Zugspannung auch einer Biegebelastung ausgesetzt sind.

Auch ist eine gezielte Kühlung im Bereich derartiger Rohrverbindungen zwischen dem von der Rohrleitung geführten Medium und der Flanschverbindung problematisch, da eine Flanschkühlung einen zusätzlichen radialen Abstand zwischen dem Flansch und der Rohrleitung für das Kühlmedium erfordert. Durch eine derartige Kühlung können außerdem Wärmeverluste auftreten, die bei einer Dampfleitung zu einem Verlust an Arbeitsfähigkeit, also einem Exergieverlust des in der Rohrleitung geführten Mediums führen können.

Der Erfindung liegt daher die Aufgabe zugrunde, eine besonders geeignete Vorrichtung zum Verbinden von Leitungsabschnitten einer von einem heißen und hoch komprimierten Medium durchströmten, insbesondere einer dampfdurchströmten, Rohrleitung anzugeben, mit der die vorgenannten Nachteile vermieden sind.

Diese Aufgabe wird erfindungsgemäß gelöst durch die Merkmale des Anspruchs 1. Dazu ist eine Anzahl von Zugelementen vorgesehen, die sich mit deren Zugschäften in Rohrlängsrichtung zwischen an den Rohrenden angeordneten und in Rohrumfangsrichtung benachbarten Formelementen erstrecken. Endseitig des Zugschaftes des jeweiligen Zugelements vorgesehene und sich beidseitig des Zugelements in dessen Querrichtung erstreckende Formteile hinter- oder übergreifen die an den Rohrenden vorgesehenen Formelemente in Rohrumfangsrichtung formschlüssig.

Die Verbindungsvorrichtung mit mehreren am Umfang der zu verbindenden Leitungsabschnitte vorzugsweise gleichmäßig verteilt angeordneten Zugelementen gewährleistet bei gleichzeitig hoher Festigkeit auch bei einer hohen Temperatur und einem hohen Druck des in der Rohrleitung geführten Mediums eine besonders kompakte Anordnung der Verbindungselemente mit im Vergleich zu den bekannten Flanschverbindungen, insbesondere im Vergleich zu den bekannten Klammerverbindungen, besonders geringer radialer Ausdehnung. Außerdem sind Spannungskonzentrationen in Folge von Kraftumlenkungen reduziert. Ferner wird aufgrund der symmetrischen Anordnung und insbesondere aufgrund der symmetrischen Gestaltung der Zug- und Formelemente, ein besonders vorteilhafter Kraftausgleich unter Vermeidung einer Biegebelastung der Zugelemente erreicht.

Durch eine geeignete Ausformung der Formteile des oder jedes Zugelements und der Formelemente am jeweiligen Rohrende kann innerhalb der Formschlussverbindung ein besonders günstiges Verhältnis zwischen Zugquerschnitt des Zugelements und den Wirkflächen eingestellt werden.

Bezüglich der Zugelemente und deren Formteile sowie der Formelemente der Rohrabschnitte ist eine Variante besonders vorteilhaft, bei der die Formelemente durch am jeweiligen Rohrende angesetzte oder angeformte und somit diskrete radiale Vorsprünge gebildet sind. Die radialen Vorsprünge können auch durch Einbringen von Nuten in einen am Rohrende angeformten Ringwulst hergestellt werden. Bei dieser Variante sind die endseitig an den sich zwischen benachbarten Vorsprüngen in Rohrlängsrichtung erstreckenden Zugschaft des jeweiligen Zugelements vorzugsweise angeformten Formteile zweckmäßigerweise nach Art eines Hammerkopfes ausgebildet. Diese bezüglich der Längsachse des Zugelements nach Art eines I-Trägers spiegelsymmetrisch ausgebildeten Formteile, die somit beidseitig des Zugelements über dessen Schaft in Querrichtung hinausragen, hintergreifen die Formelemente des jeweiligen Rohrabschnitts am der entsprechenden Rohrmündung abgewandten Ende in Rohrumfangsrichtung.

In einer zweckmäßigen Ausgestaltung weist jedes Rohrende eine zu dessen Kontaktfläche hin zunehmende Rohrwanddicke auf, während der Zugschaft des Zugelements auf der den Rohrenden zugewandten Seite ausgekehlt und somit tailliert oder konkav ausgebildet ist. Bei beiden Ausführungsformen weist das Zugelement einen sich zwischen den Formteilen erstreckenden Zugschaft mit ringsegmentartiger Querschnittsfläche auf. Die Querschnittsfläche kann jedoch auch trapezförmig, rechteckig, nierenförmig oder sechseckig sein.

Alternativ sind die Formelemente durch radiale Ausnehmungen in der Rohrwandung des Rohrendes gebildet, wobei das jeweilige Rohrende entsprechend dickwandig ausgeführt ist. Die Zugelemente, deren Formteile formschlüssig in diese Ausnehmungen eingebracht werden, sind bei dieser Variante endseitig zweckmäßigerweise nach Art eines doppelten Hammerfußes oder eines Tannenbaumfußes, wie dieser bei Turbinenschaufeln üblich ist, ausgebildet. Auch sind weitere Fügeverbindungsarten denkbar, beispielsweise eine Sägezahn-, eine Haken- oder eine Schwalbenschwanzverbindung. Das jeweilige Formteil des Zugelements weist dann eine entsprechende Anzahl von in Rohrlängsrichtung hintereinanderliegenden und in der Ausnehmung parallel in Eingriff befindlichen Teilzweigen mit an die Kontur der Ausnehmung angepaßter Außenkontur auf, wobei die Teilzweige wiederum in Rohrumfangsrichtung ragen, d. h. sich in diese erstrecken. Eine besonders bevorzugte Ausführungsform dieser Variante ist ein Tannenbaumkopf am jeweiligen Ende des Zugelements.

Das Zugelement selbst ist vorteilhafterweise nach Art eines Zugankers vorgespannt. Dadurch wird ein Abheben der Rohrenden voneinander bei einer Druckbeaufschlagung sicher verhindert. Zum Toleranzausgleich und zum Ausgleichen von betriebsbedingten Längungen der Zugelemente sind zweckmäßigerweise zwischen den sich gegenüberliegenden Wirkflächen der Formteile einerseits und der Formelemente andererseits zumindest an einem Ende des Zugelements Beilagen vorgesehen. Dabei kann die oder jede Beilage auf Übermaß gefertigt sein. Auch kann alternativ oder zusätzlich zwischen den Rohrenden ein rückfederndes Dichtelement vorgesehen sein. Auch können die sich gegenüberliegenden Wirkflächen derart zueinander geneigt ausgebildet sein, dass die Beilage in die zwischen den zueinander beabstandeten Wirkflächen gebildete Nut quasi hineingezogen wird. Die Ausbildung einer geneigten oder steigenden Wirkfläche am Formelement und/oder am Formteil hat zudem den Vorteil, dass das Formteil des Zugelements bei der Montage in Position gehalten wird. Das Spannen der Zuganker erfolgt vorzugsweise mittels einer hydraulischen Vorrichtung oder durch thermische Längung.

Zur Vermeidung von Spannungskonzentrationen infolge von Kerbwirkungen am sich zwischen den Formteilen erstreckenden Zugschaft des Zugelements weist dieses an dessen den Rohrenden zugewandten Anlagefläche vorzugsweise sowohl im Bereich der Formteile als auch entlang des Zugschaftes abgerundete Flächenkanten auf. Entsprechend weist auch das oder jedes Formelement am Übergang zum Rohrende abgerundete Flächenecken mit einer der Kantenrundungen des Zugelements entsprechenden Verrundung mit einem bestimmten Rundungsradius oder einer Radienkombination auf. Dadurch sind einerseits Kerbwirkungen begünstigende scharfkantige Flächenkanten innerhalb der Verbindung vermieden. Andererseits ist durch eine Abrundung der Flächenkanten und -ecken mit einander angepassten Radien eine besonders dichte Anlage des jeweiligen Zugelements am Außenmantel der Rohrenden möglich.

Auch kann der oder jeder Zuganker mit einem definierten radialen Spalt zur Rohrleitung beabstandet angeordnet sein. Dadurch ist die Wärmeeinleitung vom in der Rohrleitung geführten Medium über den Rohrmantel in den Zuganker vermindert. Aufgrund der Wärmeübergangswiderstände zwischen dem Medium und dem Zuganker ist hier - wenn eine Kühlung der Zuganker erfolgt - nur eine vergleichsweise geringe Wärmemenge abzuführen. Dies führt vorteilhafterweise zu einer nur geringen Temperaturabsenkung des Mediums in der Rohrleitung.

Die mit der Erfindung erzielten Vorteile bestehen insbesondere darin, dass durch eine Rohrverbindung mittels Zugelementen, die mit entsprechenden Formelementen an den Rohrenden zu verbindenden Leitungsabschnitte formschlüssig verbunden sind, eine besonders günstige Aufteilung der verfügbaren Umfangsfläche der Rohrleitung bei gleichzeitig besonders hoher Flächenausnutzung erzielt wird. Darüber hinaus treten durch gezielte Anpassung der radialen Erstreckung der Verbindung und der vorteilhaften Aufteilung der verfügbaren Fläche besonders geringe Verformungen der Zugelemente sowie der Rohrenden und somit nur geringe mechanische Spannungen innerhalb der Verbindung auf. Dadurch, dass die Zugelemente in den durch die Vorsprünge bzw. durch die Ausnehmungen gebildeten radialen Flanschnuten oder Radialnuten einliegen, liegen die Zugelemente an der von den rohrendseitigen Formelementen überragten Rohraußenwand praktisch direkt an mit der Folge, dass eine geringst mögliche radiale Ausdehnung der Verbindung erreicht ist.

Als Montagehilfe und zur Fixierung werden vorteilhafterweise Spannringe eingesetzt, die die Zuganker umfassen und infolge der dadurch bedingten Radialkraft in deren Position halten.

Nachfolgend werden Ausführungsbeispiele der Erfindung anhand einer Zeichnung näher erläutert. Darin zeigen:
- FIG 1: in perspektivischer Darstellung eine Rohrverbindung mit einer Anzahl von am Rohrumfang verteilt angeordneten Zugelementen,
- FIG 2: einen Ausschnitt entlang der Linie II-II in FIG 1 mit einer Beilage zwischen einem Zugelement und einem Formelement der Rohrverbindung,
- FIG 3: im Querschnitt einen Kreisausschnitt III-III der Rohrverbindung gemäß FIG 1,
- FIG 4: in perspektivischer Darstellung eine bevorzugte Ausführungsform des Zugelements gemäß FIG 1,
- FIG 5: in perspektivischer Darstellung die Rohrenden der Leitungsabschnitte mit als Vorsprünge ausgebildeten Formelementen,
- FIG 6: im Längsschnitt ein Rohrende mit Formelementen gemäß FIG 4 und einer modifizierten Ausführung des Zugelements, und
- FIG 7: eine alternative Ausführungsform der Rohrverbindung mit einer Ausnehmung am Rohrende und mit einem Zugelement mit tannenbaumartigem Formteil.

Einander entsprechende Teile sind in allen Figuren mit den gleichen Bezugszeichen versehen.

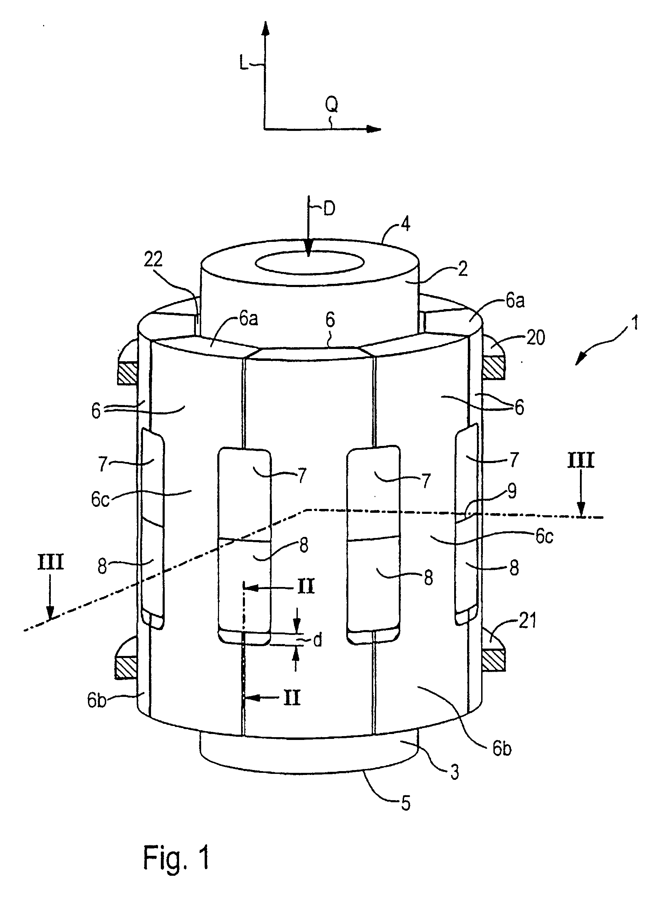

FIG 1 zeigt die Rohrverbindung 1 im Bereich der Rohrenden 2,3 von zwei nur ausschnittsweise dargestellten und im Betrieb beispielsweise heißen und unter hohem Druck stehenden Frischdampf D führenden Leitungsabschnitten oder Rohrstücken 4 bzw. 5, die nachfolgend als Rohrleitung bezeichnet sind. Der Dampf D weist beispielsweise eine Temperatur von mehr als 600°C und einen Druck von mehr als 250bar und somit einen hohen Dampfzustand auf, wie er bei zukünftigen Kraftwerken zur Erzeugung elektrischer Energie zu erwarten ist.

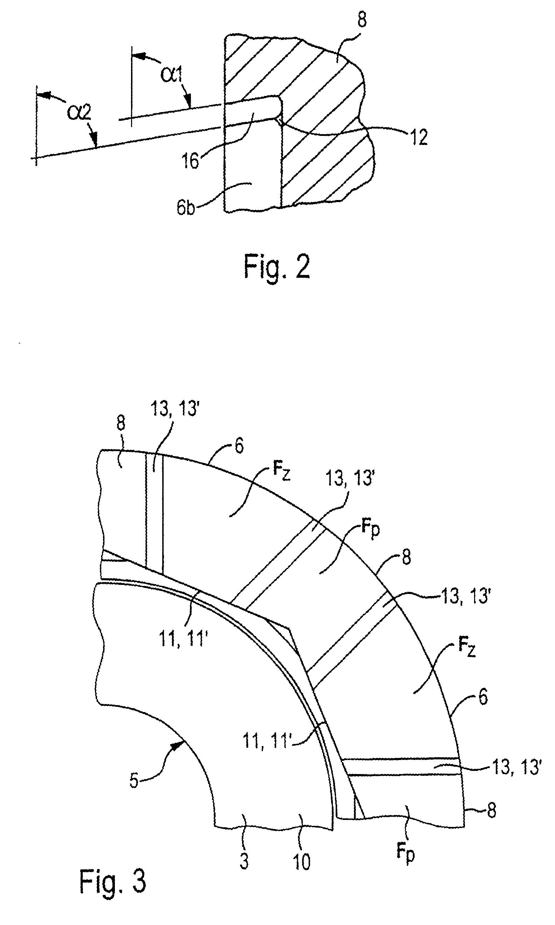

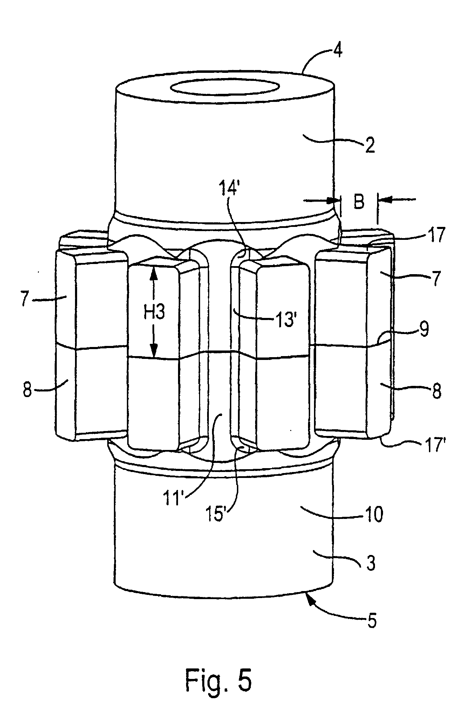

Die Rohr- oder Leitungsverbindung 1 weist eine Anzahl von am Umfang der Rohrenden 2,3 verteilt angeordneten Zugelementen 6 auf, die mit an den Rohrenden 2,3 angeformten Formelementen 7 bzw. 8 formschlüssig verbunden sind. Die vorzugsweise sowohl in Längsrichtung L als auch in Querrichtung Q symmetrisch ausgebildeten Zugelemente 6 liegen im Montageendzustand in Rohrlängsrichtung L und überdecken dabei die Teilfuge 9 zwischen den Rohrenden 2,3, d. h. zwischen deren Kontaktflächen, zumindest annähernd gleichermaßen. Dazu weist jedes Zugelement 6 endseitig jeweils ein im Ausführungsbeispiel hammerkopfartiges Formteil 6a,6b auf, zwischen denen sich einstückig mit diesen ein Zugschaft 6c erstreckt. Der Zugschaft 6c des Zugelements 6 erstreckt sich in Rohrlängsrichtung L zwischen in Rohrumfangsrichtung benachbarten Formelementpaaren 7,8 der Rohrenden 2,3. Er liegt dort vorzugsweise passgenau in der durch die Formelemente 7,8 gebildeten Nut mit seiner Anlagefläche 11 direkt an der Außenseite der Rohrwand 10, d. h. an deren korrespondierenden Anlagefläche 11' (FIG 5) an. Dies ist in FIG 3 in einer Schnittdarstellung entlang der Linie III-III in FIG 1 veranschaulicht.

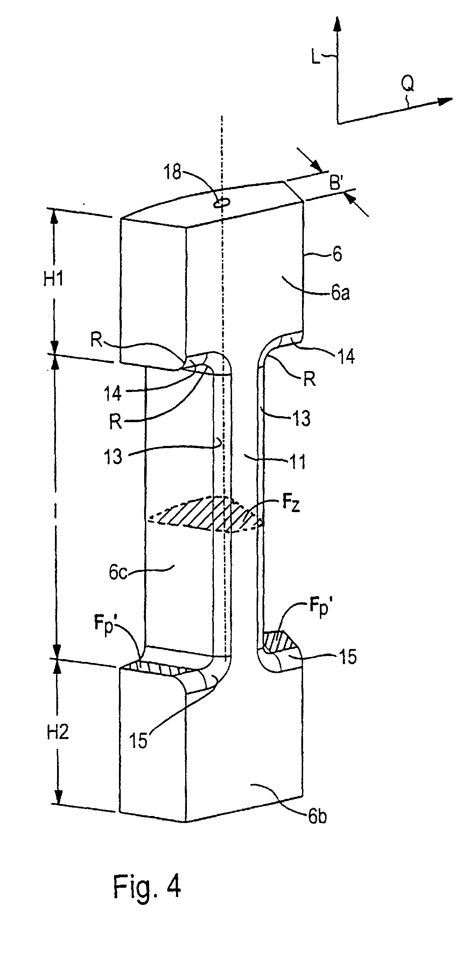

Wie in FIG 3 anhand der Formelemente 8 des Rohrendes 3 veranschaulicht und aus FIG 5 deutlich ersichtlich, sind die Formelemente 7,8 in Form von Vorsprüngen an die Rohraußenwand 10 des jeweiligen Rohrendes 2 bzw. 3 angeformt. Alternativ kann auch eine Ringwulst an die Rohrenden 2,3 angeformt sein, in die die Zugelemente 6 aufnehmende Nuten eingearbeitet sind. Durch die direkte Anlage der Zugelemente 6 an der Rohraußenwand 10 ist eine besonders günstige Platzausnutzung am Rohrumfang mit geringer radialer Ausdehnung der Rohrverbindung 1 mit der Folge besonders geringer Hebelarme erreicht. Auch ist ersichtlich, dass das Verhältnis zwischen den Zugquerschnitten F_{z} der Zugelemente 6 und den Pressungsflächen Fₚ der Formelemente 7,8 und der mit diesen korrespondierenden wirksamen Pressungsflächen F'ₚ (FIG 4) der Zugelemente 6 hinsichtlich der Werkstoffgrenzwerte in einfacher Weise optimierbar ist.

Eine bevorzugte Ausführungsform des Zugelements 6 zeigt FIG 4. Dort sind die Zugquerschnittsfläche F_{z} und die Pressungsflächen F'ₚ zur Veranschaulichung schraffiert dargestellt. Das Zugelement 6 entspricht im Querschnitt einem Segment eines Kreisrings. Die Flächenkanten 13 im Bereich der Anlagefläche 11 des Zugschaftes 6c des Zugelements 6 sind mit einer Verrundung R versehen. Entsprechend sind auch die sich an diese Flächenkanten 13 anschließenden Flächenkanten 14,15 der Formteile 6a bzw. 6b im Bereich der Anlagefläche 11 abgerundet, so dass durch diese Verrundungen 13 bis 15 insgesamt eine besonders kerbgünstige Gestaltung gegeben ist. Die Höhe H1 und H2 der Formteile 6a bzw. 6b ist im Hinblick auf hinreichend niedrige mechanische Spannungen, d. h. aus einer Kraft quer zum Formteil 6a,6b resultierende Biege- und Schubspannungen, gewählt.

Der Vorteil dieser Ausgestaltung der Zugelemente 6 und der mit diesen innerhalb des Formschlusses korrespondierenden Formelemente 7,8 der Rohrenden 2 bzw. 3 besteht insbesondere darin, dass die Kraftübertragung sehr nahe am Rohraußendurchmesser und damit an der Rohraußenwand 10 erfolgt. Dadurch ist der radial verfügbare Raum besonders günstig genutzt. Eine derart kompakte Bauweise der Rohrverbindung 1 wirkt sich insbesondere bei den bei hohen Temperaturen vorliegenden niedrigen Werkstoffkennwerten vorteilhaft aus. Insgesamt kann somit ein im Vergleich zu einer Flanschverbindung erheblich größerer Zugquerschnitt F_{z} realisiert werden. Die Verbindung weist zudem einen günstigen insgesamt zur Kraftübertragung nutzbaren Querschnitt F_{z} + Fₚ auf. Dabei kann das Verhältnis der Pressungsflächen Fₚ,F'ₚ - und damit der Formschlussflächen - zu den Zugquerschnitten F_{z} - und damit zum Zugbereich - der Zugelemente 6 derart gewählt werden, dass die jeweiligen Beanspruchungsgrenzwerte der für das Zugelement 6 und die Rohrenden 2,3 verwendeten Werkstoffe in besonders hohem Maße genutzt werden können.

Die Anordnung und Ausgestaltung der Formelemente 7,8 an den Rohrenden 2,3 der Rohrleitung 4,5 sind in FIG 5 dargestellt, die die Rohrenden 2,3 mit den daran angeformten Vorsprüngen oder Formelementen 7 bzw. 8 ohne Zugelemente 6 zeigt. Im Übergangsbereich zwischen den Formelementen 7,8 und dem Außenmantel 11 des jeweiligen Rohrendes 2 bzw. 3 sind die Flächenecken 13' bis 15' mit einer entsprechenden Verrundung R versehen. Die Höhe H3 der Formelemente 7,8 ist im Hinblick auf eine hinreichend niedrige Spannungshöhe festgelegt.

Aus der im wesentlichen vom in der Rohrleitung 4,5 herrschenden Innendruck abhängigen, wirkenden axialen Verbindungskraft einerseits und den zulässigen Pressungen und Zugspannungen andererseits ist die radiale Erstreckung und damit die Breite B,B' (FIG 4) der Formelemente 7,8 bzw. der Zugelemente 6 bestimmt. Die biegebeanspruchten Vorsprünge oder Formelemente 7,8 und die Formteile 6a,6b der Zugelemente 6 können durch Wahl der jeweiligen Höhe H3 bzw. H1,H2 derart gestaltet werden, dass Biege- und Schubspannungen sowie entsprechende Verformungen ausreichend niedrig sind. Die beidseitige, bevorzugt symmetrische Anordnung der Formteile 6a,6b am Zugelement 6 vermeidet unerwünschte Biegungen im Zugbereich, d. h. im Bereich des Zugschaftes 6c. Dies entspricht dem Konstruktionsprinzip des Kraftausgleiches. Durch diese Verbindungsvorrichtung oder Rohrverbindung 1 mit symmetrischer Anordnung der Formelemente 7,8 und Formteile 6a,6b ist gewährleistet, dass Spannungskonzentrationen durch eine Kraftumlenkung wesentlich reduziert und ein Bereich mit lediglich einer Zugbeanspruchung ohne Biegung geschaffen ist. Die Masse eines Zugelements 6 ist deutlich kleiner als die Masse einer entsprechenden Überwurfmutter.

Die Zugelemente 6 sind vorzugsweise vorgespannt, so dass ein Abheben der Rohrenden 2,3 voneinander infolge einer Druckbeaufschlagung verhindert ist. Ein Ausgleich von Toleranzen der Bauteile und unvermeintlicher Längungen der Zugelemente 6 bei Wiederverwendung nach langer Betriebszeit unter hohen Temperaturen erfolgt zweckmäßigerweise durch Beilagen 16 (FIG 1, FIG 2). Die Herstellung der Beilage 16 erfolgt vorzugsweise unter Berücksichtigung der tatsächlichen Abmaße der Bauteile, d.h. insbesondere unter Berücksichtigung des Abstandes zwischen den den Anlageflächen 17,17' der Formelemente 7 bzw. 8 (FIG 5) der Rohrenden 2,3 einerseits sowie dem Abstand zwischen den Formteilen 6a,6b der Zugelemente 6 andererseits. Anhand dieser Abmaße, d. h. der doppelten Höhe H3 sowie der Länge 1 des Zugschaftes 6c (FIG 4), wird eine erforderliche Beilagendicke d ermittelt und eine entsprechende Beilage 16 hergestellt. Diese gleicht Toleranzen und beim bisherigen Betrieb infolge hoher Temperaturen auftretende Kriechverformungen aus und bewirkt zusätzlich eine Vorspannung der als Zuganker wirkenden Zugelemente 6. Dies erfolgt zweckmäßigerweise dadurch, dass die Beilage 16 mit Übermaß gefertigt ist.

Auch können die sich gegenüberliegenden Wirk- oder Pressflächen Fₚ,F'ₚ derart zueinander geneigt ausgebildet sein, dass die Beilage 16 in die zwischen den zueinander beabstandeten Wirkflächen Fₚ,F'ₚ gebildete Kammer 12 quasi hineingezogen wird. Dies ist in FIG 2, die einen Schnitt entlang der Linie II-II in FIG 1 darstellt, veranschaulicht. Dabei sind die Neigungswinkel α₁ und α₂ der Press- oder Wirkflächen Fₚ bzw. F'ₚ übertrieben dargestellt. Die Ausbildung einer geneigten oder steigenden Wirkfläche Fₚ, F'ₚ am Formelement 8 und/oder am Formteil 6b hat zudem den Vorteil, dass das Formteil 6b des Zugelements 6 bei der Montage in Position gehalten wird.

Die Winkel α₁ und α₂ sollten gemäß der Beziehung α₁ ≤ α₂ ≤ 90° gewählt werden.

Nachdem die Zugelemente 6 zwischen die Formelemente 7,8 eingelegt und an einem Ende, zweckmäßigerweise am Oberende, die entsprechenden Formteile 6a in Kontakt mit den Formelementen 7 gebracht und dort ggf. fixiert worden sind, werden die Zugelemente 6 zweckmäßigerweise thermisch oder hydraulisch gelängt. Die Längung erfolgt bis das Übermaß der Beilagen 16 überwunden ist und diese eingelegt werden können. Zur thermischen Längung ist zweckmäßigerweise eine Heizbohrung 18 vorgesehen, die das jeweilige Zugelement 6 in Längsrichtung L durchsetzt (FIG 4). Nach Aufhebung der Längung sind die Zugelemente 6 gespannt. Ein Lösen der Verbindung 1 erfolgt in umgekehrter Reihenfolge.

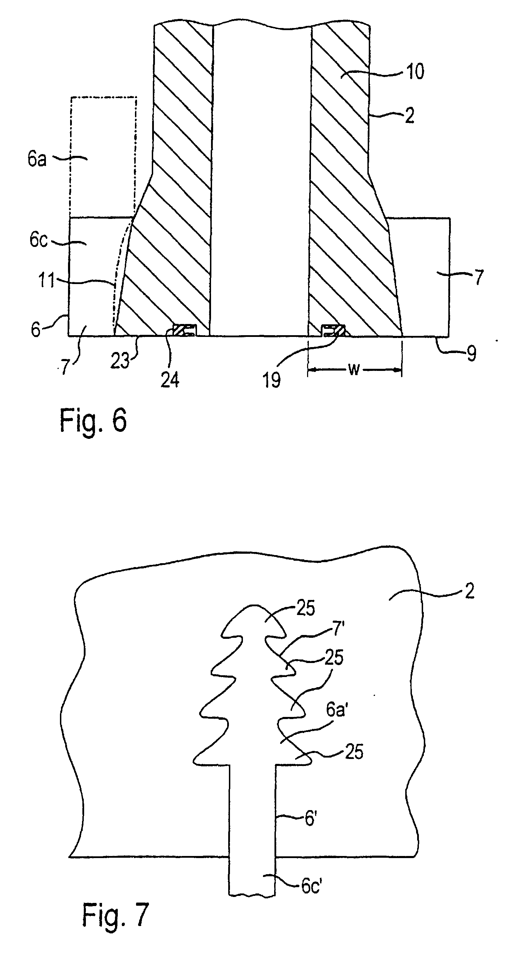

Eine rückfedernde Dichtung 19 kann eventuelle Verformungen der Verbindungspartner, d.h. der Rohrenden 2,3 und der Zugelemente 6, ausgleichen. Ein Beispiel für die Anordnung der rückfedernden Dichtung 19 ist in FIG 6 dargestellt. Während der Montage wird zweckmäßigerweise ein oberer und ein unterer Spannring 20 bzw. 21 um die Verbindung 1, d.h. um die Anordnung der Zugelemente 6 herum gelegt, so dass diese zumindest während der Montage fixiert sind (FIG 1).

Die Zugelemente 6 können auch gekühlt werden. Eine Kühlung der Zugelemente 6 kann aufgrund der nur indirekten Wärmeleitung vom heißen Dampf D zu den Zugelementen 6 auf einfache Weise beispielsweise durch Kühlrippen oder durch axiale Kühlbohrungen erfolgen. Aufgrund der Wärmeübergangswiderstände zwischen dem in der Rohrleitung 4,5 geführten Medium D und den Zugelementen 6 ist nur eine vergleichsweise geringe Wärmemenge abzuführen, so dass nur eine entsprechend geringe Temperaturabsenkung des Mediums D in der Rohrleitung 4,5 erfolgt. Zur Kühlung können die Zugelemente 6 mit einem definierten radialen Spalt 22 (FIG 1) zur Rohrleitung 4,5 ausgeführt sein, um die Wärmeleitung zusätzlich zu vermindern.

Die Abrundung der Flächenkanten 13 bis 15 des Zugelements 6 und der mit diesen korrespondierenden Flächenecken 13' bis 15' am Rohraußenmantel 10 ist insbesondere bei geringen verbleibenden Werkstoffkennwerten im Hinblick auf eine kerbgünstige Gestaltung der Verbindungspartner 6 und 7,8 von erheblichem Vorteil. Die Vorspannung kann im Betrieb bei Bedarf durch gezielte Wärmeführung eingestellt werden, z.B. durch eine permanente Temperaturdifferenz zwischen den Zugelementen 6 und den Rohrenden 2,3. Eventuelle Unterschiede in der thermischen Ausdehnung bei Verwendung unterschiedlicher Werkstoffe für die Zugelemente 6 einerseits und die Rohrenden 2,3 andererseits können durch Temperaturführung, d.h. durch gezielte Kühlung oder Beheizung, oder auch durch Beilagen 16 mit hohen Ausdehnungskoeffizienten zumindest teilweise ausgeglichen werden.

FIG 6 zeigt eine Variante der Rohrverbindung 1 gemäß FIG 1 mit einer zur Teilfuge 9 und damit zur Kontaktfläche 23 des jeweiligen Rohrendes 2,3 hin zunehmenden, ungestörten Rohrwanddicke w. Dies ermöglicht eine besonders günstige Übertragung der in die Formelemente 7,8 eingeleiteten Last. In die Kontaktfläche 23 ist eine Ringnut 24 zur Aufnahme der rückfedernden Dichtung 19 eingeformt.

Der Zugschaft 6c des Zugelements 6 ist - wie in der linken Figurenhälfte durch eine strichlinierte Kontur dargestellt - auf seiner den Rohrenden 7,8 zugewandten Seite ausgekehlt und weist somit in diesem Bereich eine konkave Anlagefläche 11 auf. Das Zugelement 6 weist somit auf der Höhe der Kontaktfläche 23 des Rohrendes 7,8 einen kerbfreien Bereich auf, an den sich in Richtung des jeweiligen Formteils 6a bzw. 6b ein Bereich mit vergrößertem Querschnitt zur Kerbspannungsreduzierung anschließt. Diese Ausführungsform hat den Vorteil, dass im Bereich der Kraftumlenkung, nämlich im Bereich zwischen den Formteilen 6a,6b und dem Zugschaft 6c zwischen den Formelementen 7,8 und den Rohrenden 2 bzw. 3, hohe Querschnitte bereitgestellt sind, die eine besonders geringe Spannungskonzentration an diesen Orten bewirken. Somit ist eine hinsichtlich Kerbwirkungen besonders günstige Gestaltung gegeben.

Eine alternative Ausführung der Rohrverbindung 1 zeigt FIG 7 anhand eines Ausschnitts eines der Rohrenden 2,3. Dort sind die Formelemente durch radiale Ausnehmungen 7',8' am jeweiligen Rohrende 2,3 gebildet, wobei hier lediglich z. B. das in der Ausnehmung 7' des Rohrendes 2 einliegende Formteil 6a' des Zugelements 6' dargestellt ist. Das Zugelement 6' ist auch bei dieser Ausführungsform symmetrisch ausgebildet. Die Formteile 6a',6b' des jeweiligen Zugelements 6' weisen eine Anzahl von in Rohrlängsrichtung L hintereinanderliegenden und in der Ausnehmung 7',8' parallel in Eingriff befindlichen Teilzweigen 25 auf. Im Ausführungsbeispiel sind die Formteile 6a',6b' nach Art eines Tannenbaumfußes ausgeformt, wie dieser häufig bei Schaufelfüßen von Turbinenschaufeln (Tannenbaumfuß-Verbindung) Anwendung findet. Es sind auch andere Formen denkbar, wobei in jedem Fall die Außenkontur des jeweiligen Formteils 6a',6b' an die Innenkontur der Ausnehmung 7' bzw. 8' angepaßt ist.

## Patentansprüche

1. Vorrichtung zum Verbinden von Leitungsabschnitten einer von einem Medium (D) durchströmten Rohrleitung (4,5), mit einer Anzahl von am Umfang deren Rohrenden (2,3) verteilt angeordneten Zugelementen (6,6'),
**dadurch gekennzeichnet, dass** sich jedes Zugelement (6,6') mit dessen Zugschaft (6c,6c') in Rohrlängsrichtung (L) zwischen an den Rohrenden (2,3) vorgesehenen und in Rohrumfangsrichtung benachbarten Formelementen (7,8;7') erstreckt, und dass sich endseitig des Zugschaftes (6c/6c') vorgesehene Formteile (6a,6b;6a') beidseitig des Zugelements (6,6') in dessen Querrichtung (Q) erstrecken und die Formelemente (7 bzw. 8;7') am der Kontaktfläche (23) des jeweiligen Rohrendes (2,3) abgewandten Ende in Rohrumfangsrichtung formschlüssig unter Vermeidung einer Biegebelastung der Zugelemente (6, 6') hintergreifen.

2. Vorrichtung nach Anspruch 1,
**dadurch gekennzeichnet, dass** die Formelemente (7,8) durch radiale Vorsprünge am jeweiligen Rohrende (2 bzw. 3) gebildet sind.

3. Vorrichtung nach Anspruch 1,
**dadurch gekennzeichnet, dass** die Formelemente (7') durch radiale Ausnehmungen am jeweiligen Rohrende (2) gebildet sind.

4. Vorrichtung nach Anspruch 3,
**dadurch gekennzeichnet, dass** die Formteile (6a') eine Anzahl von in Rohrlängsrichtung (L) hintereinanderliegenden und in der Ausnehmung (7') parallel in Eingriff befindlichen Teilzweigen (25) aufweisen.

5. Vorrichtung nach einem der Ansprüche 1 bis 4,
**dadurch gekennzeichnet, dass** das Zugelement (6,6') vorgespannt ist.

6. Vorrichtung nach einem der Ansprüche 1 bis 5,
**gekennzeichnet durch** eine Beilage (16) zwischen dem Formelement (8) des Rohrendes (3) und dem Formteil (6b) des Zugelements (6).

7. Vorrichtung nach einem der Ansprüche 1 bis 6,
**dadurch gekennzeichnet, dass** zwischen den Rohrenden (2,3) eine rückfedernde Dichtung (19) vorgesehen ist.

8. Vorrichtung nach einem der Ansprüche 1 bis 7,
**dadurch gekennzeichnet, dass** der Zugschaft (6c) des Zugelements (6) eine kreissegmentartige Querschnittsfläche (F_{z}) aufweist.

9. Vorrichtung nach einem der Ansprüche 1 bis 8,
**dadurch gekennzeichnet, dass** jedes Rohrende (2,3) eine zu dessen Kontaktfläche (23) hin zunehmende Rohrwanddicke (w) aufweist, und dass der Zugschaft (6c) des Zugelements (6) auf der den Rohrenden (2,3) zugewandten Seite (11) ausgekehlt ist.

10. Vorrichtung nach einem der Ansprüche 1 bis 9,
**dadurch gekennzeichnet, dass** das Zugelement (6) an dessen den Rohrenden (2,3) zugewandten Anlagefläche (11) im Bereich zwischen den Formteilen (6a,6b) abgerundete Flächenkanten (13 bis 15) aufweist, und dass die Formelemente (7,8) in diesem Bereich mit den Flächenkanten (13 bis 15) korrespondierende Flächenecken (13' bis 15') aufweisen.

11. Vorrichtung nach einem der Ansprüche 1 bis 10,
**dadurch gekennzeichnet, dass** das Zugelemente (6) unter Spaltbildung zur Rohrleitung (4,5) angeordnet ist.

12. Vorrichtung nach einem der Ansprüche 1 bis 11,
**dadurch gekennzeichnet, dass** das Zugelement (6) eine Heizbohrung (18) aufweist.

13. Vorrichtung nach einem der Ansprüche 1 bis 12,
**dadurch gekennzeichnet, dass** das Zugelement (6,6') sowohl in dessen Längsrichtung (L) als auch in dessen Querrichtung (Q) symmetrisch ausgebildet ist.

14. Vorrichtung nach einem der Ansprüche 1 bis 13,
**gekennzeichnet durch** mindestens einen die um den Umfang der Rohrverbindung (1) verteilt angeordneten Zugelemente (6) umgebenden Spannring (20,21).

## Claims

1. Device for connecting piping sections of a pipeline (4, 5) through which a medium (D) flows, having a number of tension elements (6, 6') arranged so as to be distributed over the circumference of the pipe ends (2, 3) of the pipeline (4, 5), **characterized in that** each tension element (6, 6'), with its tension shank (6c, 6c'), extends in the longitudinal direction (L) of the pipe between shaped elements (7, 8; 7') which are provided at the pipe ends (2, 3) and are adjacent in the circumferential direction of the pipe, and **in that** shaped parts (6a, 6b; 6a') provided at the ends of the tension shank (6c, 6c') on both sides of the tension element (6, 6') extend in the transverse direction (Q) of the latter and engage in the circumferential direction of the pipe behind the shaped elements (7 and resp. 8; 7') in a positive-locking manner at the end remote from the contact surface (23) of the respective pipe end (2, 3) while avoiding a bending load on the tension elements (6, 6').

2. Device according to Claim 1, **characterized in that** the shaped elements (7, 8) are formed by radial projections on the respective pipe ends (2 and 3).

3. Device according to Claim 1, **characterized in that** the shaped elements (7') are formed by radial recesses on the respective pipe end (2).

4. Device according to Claim 3, **characterized in that** the shaped parts (6a') have a number of partial branches (25) lying one behind the other in the longitudinal direction (L) of the pipe and being in engagement in the recess (7') in a parallel configuration.

5. Device according to one of Claims 1 to 4, **characterized in that** the tension element (6, 6') is prestressed.

6. Device according to one of Claims 1 to 5, **characterized by** a shim (16) between the shaped element (8) of the pipe end (3) and the shaped part (6b) of the tension element (6).

7. Device according to one of Claims 1 to 6, **characterized in that** a spring-back seal (19) is provided between the pipe ends (2, 3).

8. Device according to one of Claims 1 to 7, **characterized in that** the tension shank (6c) of the tension element (6) has a cross-sectional area (F_{z}) like a circle segment.

9. Device according to one of Claims 1 to 8, **characterized in that** each pipe end (2, 3) has a pipe wall thickness (w) increasing towards its contact surface (23), and **in that** the tension shank (6c) of the tension element (6) is channelled on the side (11) facing the pipe ends (2, 3).

10. Device according to one of Claims 1 to 9, **characterized in that** the tension element (6), on its bearing surface (11) facing the pipe ends (2, 3), has rounded-off surface edges (13 to 15) in the region between the shaped parts (6a, 6b), and **in that** the shaped elements (7, 8), in this region, have surface corners (13' to 15') corresponding with the surface edges (13 to 15).

11. Device according to one of Claims 1 to 10, **characterized in that** the tension element (6) is arranged so as to form a gap relative to the pipeline (4, 5).

12. Device according to one of Claims 1 to 11, **characterized in that** the tension element (6) has a heating bore (18).

13. Device according to one of Claims 1 to 12, **characterized in that** the tension element (6, 6') is of symmetrical design in both its longitudinal direction (L) and its transverse direction (Q).

14. Device according to one of Claims 1 to 13, **characterized by** at least one clamping ring (20, 21) surrounding the tension elements (6) arranged so as to be distributed over the circumference of the pipe connection (1).

## Revendications

1. Dispositif pour raccorder des tronçons de conduite d'une tuyauterie (4, 5) traversée par un milieu (D), comprenant un certain nombre d'éléments de traction (6, 6') disposés de façon répartie sur le pourtour de leurs extrémités de tube (2, 3),
**caractérisé en ce que** chaque élément de traction (6, 6') s'étend par sa tige de traction (6c, 6c') en direction longitudinale du tube (L) entre des éléments de forme (7,8 ; 7') prévus entre les extrémités de tubé (2, 3) et voisins en direction du pourtour de tube et que des parties de forme (6a, 6b ; 6a') prévues à l'extrémité de la tige de traction (6c, 6c') s'étendent des deux côtés de l'élément de traction (6, 6') dans sa direction transversale (Q) et s'accrochent à complémentarité de forme en direction de pourtour de tube aux éléments de forme (7 ou 8 ; 7') à l'extrémité opposée de la surface de contact (23) de chaque extrémité de tube (2, 3) en évitant une sollicitation en flexion des éléments de traction (6, 6').

2. Dispositif selon la revendication 1, **caractérisé en ce que** les éléments de forme (7, 8) sont constitués par des saillies radiales à chaque extrémité de tube (2 ou 3).

3. Dispositif selon la revendication 1, **caractérisé en ce que** les éléments de forme (7') sont constitués par des creux radiaux à chaque extrémité de tube (2).

4. Dispositif selon la revendication 3, **caractérisé en ce que** les parties de forme (6a) présentent un certain nombre de ramifications partielles (25) situées les unes derrière les autres en direction longitudinale de tube (L) et placées parallèlement en prise dans le creux (7').

5. Dispositif selon l'une des revendications 1 à 4, **caractérisé en ce que** l'élément de traction (6, 6') est prétendu.

6. Dispositif selon l'une des revendications 1 à 5, **caractérisé par** une rondelle de calage (16) entre l'élément de forme (8) de l'extrémité de tube (3) et la partie de forme (6b) de l'élément de traction (6).

7. Dispositif selon l'une des revendications 1 à 6, **caractérisé en ce qu'**un joint (19) à retour élastique est prévu entre les extrémités de tube (2, 3).

8. Dispositif selon l'une des revendications 1 à 7, **caractérisé en ce que** la tige de traction (6c) de l'élément de traction (6) présente une surface de section transversale (F_{z}) en segment de cercle.

9. Dispositif selon l'une des revendications 1 à 8, **caractérisé en ce que** chaque extrémité de tube (2, 3) présente une épaisseur de paroi de tube (w) qui augmente vers sa surface de contact (23) et que la tige de traction (6c) de l'élément de traction (6) est cannelée sur le côté (11) orienté vers les extrémités de tube (2, 3).

10. Dispositif selon l'une des revendications 1 à 9, **caractérisé en ce que** l'élément de traction (6) présente des arêtes de surface (13 à 15) arrondies sur ses surfaces d'appui (11) orientées vers les extrémités de tube (2, 3) dans la zone entre les parties de forme (6a, 6b) et que les éléments de forme (7, 8) dans cette zone présentent des coins de surface (13' à 15') avec les arêtes de surface (13 à 15).

11. Dispositif selon l'une des revendications 1 à 10, **caractérisé en ce que** l'élément de traction (6) est disposé en formant un intervalle par rapport à la tuyauterie (4, 5).

12. Dispositif selon l'une des revendications 1 à 11, **caractérisé en ce que** l'élément de traction (6) présente une forure de chauffage (18).

13. Dispositif selon l'une des revendications 1 à 12, **caractérisé en ce que** l'élément de traction (6, 6') est formé symétriquement aussi bien dans sa direction longitudinale (L) que dans sa direction transversale (Q).

14. Dispositif selon l'une des revendications 1 à 13, **caractérisé par** au moins un anneau de traction (20, 21) qui entoure les éléments de traction (6) placés de façon répartie autour du pourtour du raccord de tube (1).
